# EUROPEAN PATENT APPLICATION

(11) **EP 3 653 391 A1**
(43) Date of publication of application: **20.05.2020**
(21) Application number: 18883533.4
(22) Date of filing: 03.12.2018
(51) Int. Cl.: B41J 3/407, B41J 29/393, D06P 5/30

(54) **PRECISE DIGITAL PRINTING METHOD FOR FABRIC BY UTILIZING DIGITAL PRINTING MACHINE AND FABRIC**

(30) Priority: 01.12.2017 CN 201711248314
(71) Applicant: Hangzhou Honghua Digital Technology Stock Co., Ltd, Hangzhou, Zhejiang 310052 (CN)
(72) Inventor: XU, Liming, Zhejiang 310052 (CN); HUANG, Yuyuan, Zhejiang 310052 (CN); XU, Quanwei, Zhejiang 310052 (CN)
(74) Representative: Weickmann & Weickmann PartmbB
(86) International application number: PCT/CN2018/118877
(87) International publication number: WO 2019/105481

(57) **Abstract**

Provided are a digital printing method, a digital printing machine and a fabric, the printing method comprising: acquiring at least one flower pattern of an original pattern on a fabric to serve as an original template; performing secondary design on the original pattern of the fabric to obtain a target pattern template which needs to be digitally printed; using an image acquisition device to carry out pattern acquisition in real-time for the actual pattern on the fabric, and acquiring the position and shape of the actual pattern of the fabric in an inkjet printing area; calculating a deviation between a feature point in the actual pattern and a corresponding feature point of the original template; adjusting the printing position and pattern shape of the target pattern template according to the deviation; and controlling a digital nozzle to inkjet print on the fabric according to the adjusted target pattern template. With the present invention, the target pattern template is obtained by means of the secondary design on the fabric having the original pattern, and precise printing is achieved by means of the digital printing method, which enriches the pattern and/or color of the fabric; additionally, users may redesign existing fabrics according to preferences so as to achieve the desired effect.

## Description

The present application claims priority to Chinese Patent Application No. 201711248314.3, titled "PRECISE DIGITAL PRINTING METHOD FOR FABRIC BY UTILIZING DIGITAL PRINTING MACHINE AND FABRIC", filed on December 01, 2017 with Chinese Patent Office, which is incorporated herein by reference in its entirety.

### FIELD

The present disclosure relates to the field of digital printing, and in particular to a digital printing method for precisely performing printing on a fabric by a digital printer, and a fabric.

### BACKGROUND

Digital textile printing uses digital technology for textile printing. With the increasing development of the computer technology, a digital printing technology is developed, which is a high-tech combining the textile machine technology with the computer technology and the electronic information technology, and in which printing is performed via the digital technology. With the development and improvement of the digital printing technology, a great development is to be achieved in the textile printing industries, and an unprecedented development opportunity is generated for the textile printing industries due to advanced production principles and means of the digital printing technology.

In the conventional technology, a digital printer may be used for digital printing. The digital printer includes a digital inkjet printing head, a guiding belt, and a control system. In practice, a to-be-printed fabric is arranged on the guiding belt, a target pattern is inputted to the control system, and the control system controls the digital inkjet printing head to print the target pattern on the fabric.

Fabrics in the conventional technology, such as a lace fabric, a jacquard fabric, or an embroidery fabric, are mostly existing finished products, which are monotonous in colors and patterns. The users may not select products that completely satisfy to themselves from existing finished products. In addition, these finished products may not be re-customized according to needs of a single user or a small number of users.

### SUMMARY

In order to solve the above problems in the conventional printing technology, there is provided a digital printing method for precisely overprinting a digital printing pattern on a flexible fabric such as a lace fabric, a jacquard fabric, an embroidery fabric, a printing fabric, or a wallpaper by a digital printer in the present disclosure, by which a secondary design can be performed on an existing product to enrich a pattern and/or a color of the product.

Technical solutions for solving the above problems are provided in the following.

A digital printing method for precisely performing printing on a fabric by a digital printer is provided.

The digital printer includes: a digital inkjet printing head, a control system, a pattern collecting unit and a material feeding device. The digital inkjet printing head is configured to perform inkjet printing based on a target pattern.

The control system includes a storage unit, a processing unit and a control unit. The storage unit is configured to store data. The processing unit is configured to receive, process and transmit data. The control unit is configured to control the processing unit to process the data and transmit a printing signal.

The pattern collecting unit is configured to collect a pattern on the fabric and transmit the collected pattern to the storage unit of the control system.

The material feeding device includes a rack and a guiding belt. The guiding belt is looped over a driving roller and a driven roller which are mounted on the rack. A printing region is arranged on the guiding belt, and the digital inkjet printing head is arranged above the printing region.

The digital printing method includes:
acquiring at least one pattern repeat of an original pattern on the fabric as an original template, where the acquiring at least one pattern repeat of an original pattern on the fabric includes acquiring the at least one pattern repeat of the original pattern on the fabric by photographing or scanning the fabric, or acquiring the at least one pattern repeat directly from a digital file of the original pattern;
performing designing on the original template to acquire a target pattern template for digital printing from a design result, where the performing designing on the original template includes coloring and/or drafting the original pattern;
selecting feature points on the original template, and selecting feature points on the target pattern template corresponding to the feature points on the original template;
placing the fabric in the digital printer;
collecting, by the pattern collecting unit in a real-time manner, an actual pattern on the fabric, to obtain a position and a shape of the actual pattern on the fabric in a printing region;
calculating, based on the position and the shape of the actual pattern, a deviation between each feature point on the actual pattern and a corresponding one of the feature points on the original template;
adjusting, based on the deviation, an inkjet printing position and a pattern shape of the target pattern template to align each of the feature points on the target pattern template with the corresponding one of the feature points on the actual pattern; and
controlling, based on the adjusted target pattern template, a digital inkjet printing head to perform inkjet printing on the fabric.

Optionally, the controlling, based on the adjusted target pattern template, a digital inkjet printing head to perform inkjet printing on the fabric includes:
placing the fabric on the guiding belt, to cause the printing region of the fabric to face the digital inkjet printing head; and
controlling, based on the adjusted target pattern template, the digital inkjet printing head to perform inkjet printing in the printing region.

Preferably, the adjusting, based on the deviation, an inkjet printing position and a pattern shape of the target pattern template includes:
performing a step-and-repeat process on the original template and the feature points on the original template;
identifying feature points on the actual pattern on the fabric and corresponding feature points on the original template obtained after the step-and-repeat process; and
calculating a position deviation between each of the feature points on the actual pattern and the corresponding one of the feature points on the original template obtained after the step-and-repeat process; and adjusting the target pattern template based on the position deviation, to align each of the feature points on the adjusted target pattern template with the corresponding one of the feature points on the actual pattern.

Optionally, the adjusting, based on the deviation, an inkjet printing position and a pattern shape of the target pattern template includes:
selecting multiple feature points on the target pattern template, and performing a step-and-repeat process on the target pattern template and the feature points on the target pattern template;
identifying feature points of the actual pattern on the fabric and feature points on the target pattern template obtained after the step-and-repeat process; and
calculating a position deviation between each of the feature points on the actual pattern and the corresponding one of the feature points on the target pattern template obtained after the step-and-repeat process; and adjusting the target pattern template based on the position deviation, to align each of the feature points on the adjusted target pattern template with the corresponding one of the feature points on the actual pattern.

Optionally, the method further includes performing a drying process on the fabric formed after the inkjet printing is completed.

Optionally, the original pattern is a lace pattern, a jacquard pattern, an embroidery pattern, or a printing pattern.

Optionally, the target pattern template includes:
a coloring pattern; and/or
an overprinting pattern of the original pattern.

Optionally, the fabric is a textile, a plastic tablecloth, or a wallpaper.

Optionally, a size of the target pattern template is equal to a size of the original pattern or is an integer multiple of the size of the original pattern.

A digital printer is further provided according to an embodiment of the present disclosure. The digital printer includes a pattern collecting unit, a control system, a digital inkjet printing head, and a guiding belt. The guiding belt is moved by a power device, and the guiding belt is arranged to place the fabric thereon, to cause the printing region of the fabric to face the digital inkjet printing head. The guiding belt is moved in a stepwise manner to switch the fabric in the printing region, and the control unit controls, based on the adjusted target pattern template, the digital inkjet printing head to perform inkjet printing on the switched fabric.

Optionally, a heat sensitive adhesive or a pressure sensitive adhesive is provided on the guiding belt, to adhere the fabric flat on the guiding belt.

Optionally, the digital inkjet printing head is arranged on a movable unit configured to move in a direction perpendicular to a feeding direction of the guiding belt.

Optionally, the pattern collecting unit is a scanning device or a camera.

Optionally, the digital printer further includes a drying device configured to perform a drying process on the fabric formed after the inkjet printing is completed.

A fabric formed by the digital printing method described above is further provided according to an embodiment of the present disclosure.

Compared with the conventional technology, the present disclosure has the following advantages and effects. A secondary design can be performed on an existing flexible fabric product that is easy to deform, to obtain a target pattern template for digital printing. The target pattern template is precisely printed on the fabric by the digital printing method, enriching a pattern and/or a color of the product, and achieving a perfect combination of the original pattern and the target pattern template after the secondary design. In addition, a user can perform redesigning on an existing product according to personal fondness to obtain a desired effect.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description only show some embodiments of the present disclosure, and other drawings may be obtained by those skilled in the art from the drawings without any creative work.
Figure 1 is a control schematic diagram of a digital printer according to an embodiment of the present disclosure;
Figure 2 is a hardware structure diagram of the digital printer according to the embodiment of the present disclosure;

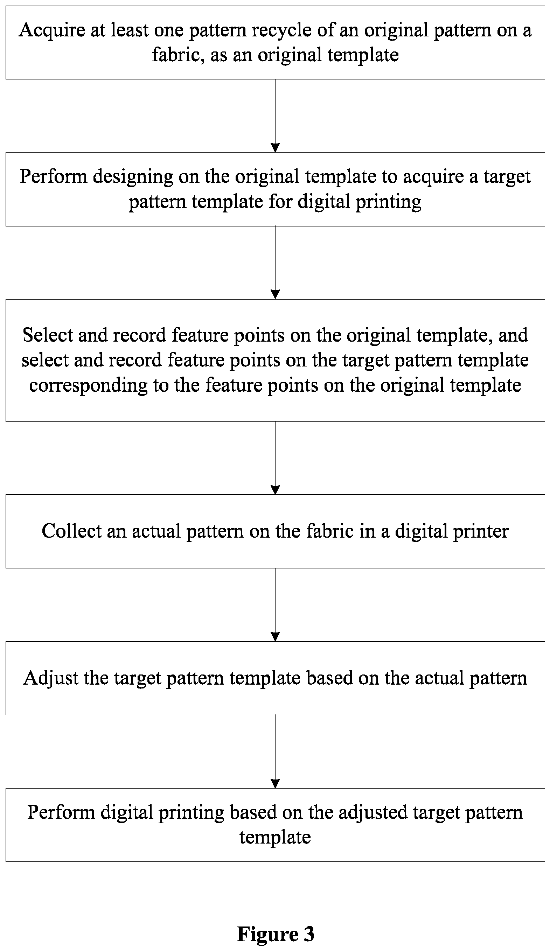

Figure 3 is a flowchart showing a digital printing method according to an embodiment of the present disclosure;
Figure 4 is a schematic diagram of a fabric according to an embodiment of the present disclosure;
Figure 5 is a schematic diagram of a fabric according to another embodiment of the present disclosure;
Figure 6 is a schematic diagram of a fabric according to another embodiment of the present disclosure; and
Figure 7 is a schematic diagram of a fabric according to another embodiment of the present disclosure.

### DETAILED DESCRIPTION OF THE EMBODIMENTS

Among existing patent documents, a method for forming a pattern on a fabric by embroidering in combination with digital overprinting is disclosed in a Chinese Invention Patent Publication No. CN102862407 B, patented on April 08, 2015. The method includes the following steps:
1) determining a pattern for embroidering and a pattern for digital overprinting;
2) embroidering the pattern for embroidering on the fabric, to generate an embroidery pattern on the fabric; and
3) printing the pattern for digital overprinting on the fabric, to generate a digital printing pattern on the fabric. Thus, a synthesized pattern including the embroidery pattern and the digital printing pattern is formed on the fabric.

In step 3), the pattern for digital overprinting is printed on the fabric by a digital printer including an information recording device and a pre-detection device and arranged at an entry of a printing region.

Step 3) is performed by the following processes a) to c).

In process a), the fabric formed with the embroidery pattern is placed in the digital printer including the pre-detection device, and information recording is performed, by the information recording device of the digital printer, on the fabric formed with the embroidery pattern, to acquire parameters such as a position, a shape and a distribution of the embroidery pattern on the fabric. The parameters are inputted to a computer to form a template with information.

In process b), the pattern for digital overprinting is loaded into the template in the computer, and the pattern for digital overprinting is accurately positioned at a reasonable overprint position of the template based on coordination or correspondence between the embroidery pattern and the pattern for digital overprinting, so that the pattern for digital overprinting matches the embroidery pattern.

In process c), the pattern for digital overprinting is printed on the fabric formed with the embroidery pattern by the digital printer, so that a synthesized pattern formed by the embroidering in combination with the digital printing is generated on the fabric.

The technical solution of the invention patent has advantages of a simple process, a scientific design, a combination of embroidery and digital printing on the fabric, precise overprint positioning and an excellent effect, so that a pattern formed on the fabric is complete and presents a stereoscopic effect, greatly improving product quality and making the digital printing more applicable.

However, in the above invention patent, a target pattern template is predetermined, and the target pattern template is decomposed into an embroidery pattern and a printing pattern. Secondary processing cannot be performed on an existing pattern on the fabric. For example, a secondary design cannot be performed on an original pattern repeat profile or pattern on articles such as a lace product, a jacquard product, an embroidery product, or a printing product.

In order to solve the above technical problems, a digital printing method applied to a control system of a digital printer is provided according to an embodiment of the present disclosure. In the method, an original pattern on a fabric is acquired, and redesigning is performed on the fabric based on the original pattern, to obtain a target pattern template for digital printing, and a digital inkjet printing head may be controlled to perform inkjet printing on the fabric based on the target pattern template. That is, even if an original pattern exists on the fabric, a secondary design can be performed based on the original pattern, and a new pattern containing the original pattern is formed on the original fabric, enriching a pattern and a color of the product and greatly improving a grade of the fabric. A User may also perform redesigning on the original product according to personal fondness to obtain a desired effect.

The present disclosure is described in detail below by embodiments with reference to the drawings. The following embodiments are used to explain the present disclosure and are not intended to limit the present disclosure.

It should further be noted that positional terms such as up, down, left, right, front, back are only referred to relative concepts in the drawings or a normal usage state of a product and are not restrictive.

### First Embodiment

Reference is made to the embodiments described in the drawings. In order to obtain a comprehensive understanding of the present disclosure, various specific details are described in the following description. However, those skilled in the art should understand that the present disclosure may be implemented without those details.

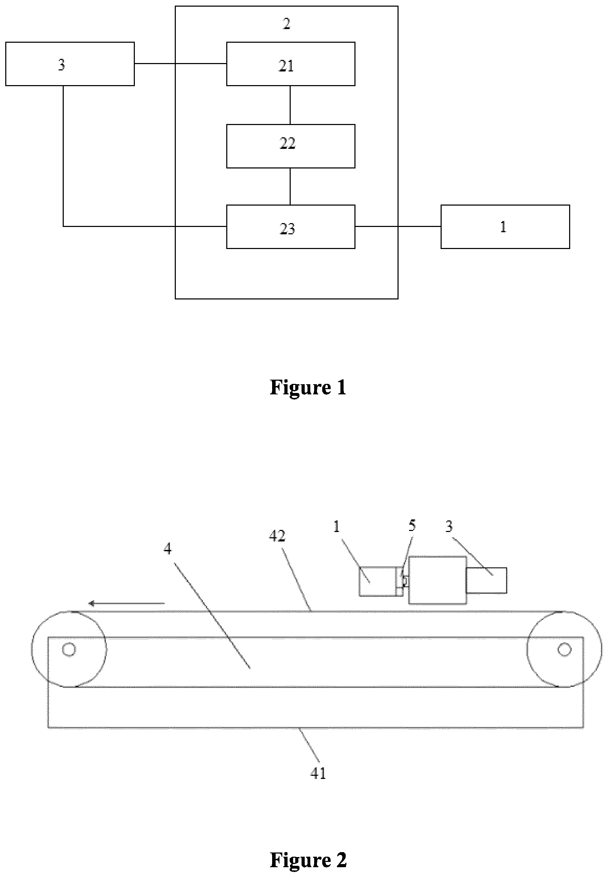

A hardware scenario in which the embodiments of the present disclosure are applicable is described below. Reference is made to Figure 1, which is a control schematic diagram of a digital printer according to an embodiment of the present disclosure. The digital printer may include: a digital inkjet printing head 1, a control system 2, and a pattern collecting unit 3. In addition, the digital printer further includes a peripheral interface, a display screen and an external port, which are not described in detail herein. Components shown in Figure 1 may be implemented in hardware, software, or a combination of the hardware and the software. Each of the components includes one or more signal processing and/or specific integrated circuits.

The pattern collecting unit 3 provided in the embodiment of the present disclosure is configured to: collect an actual original pattern on a fabric to obtain real-time information on a position and a shape of the actual original pattern on the fabric on a guiding belt of the digital printer. The pattern collecting unit 3 may be a scanning device or a camera. The fabric may be a textile, a plastic tablecloth or a wallpaper. The original pattern on the fabric may be a lace pattern, a jacquard pattern, an embroidery pattern or a printing pattern.

After obtaining the real-time information on the position and the shape of the actual original pattern on the fabric on the guiding belt of the digital printer, the pattern collecting unit 3 may transmit the real-time information on the position and the shape of the actual original pattern to the control system 2.

The control system 2 provided in this embodiment may include a processing unit 22 and a control unit 23. The processing unit 22 is configured to: receive the real-time information on the position and the shape of the actual original pattern transmitted by the pattern collecting unit; and adjust a target pattern template in a real-time manner to align the target pattern template with the actual pattern collected by the pattern collecting unit in pattern position and pattern profile, so as to obtain an actual printing pattern of the target pattern template. The control unit 23 is configured to control, based on the actual printing pattern of the adjusted target pattern template, the digital inkjet printing head to perform inkjet printing on the fabric.

In this embodiment, the process of the processing unit 22 adjusting the target pattern template includes the following steps:
selecting feature points on an original template, and performing a step-and-repeat process on the original template and the feature points on the original template;
identifying, by the processing unit 22, feature points on the actual pattern on the fabric collected by the pattern collecting unit and corresponding feature points on the original template obtained after the step-and-repeat process; and
calculating, by the processing unit 22, a position deviation between each of the feature points of the collected actual pattern on the fabric and the corresponding one of the feature points of the original template obtained after the step-and-repeat process, and adjusting the target pattern template appropriately based on the position deviation, to align each of the feature points on the adjusted target pattern template with the corresponding one of the feature points on the actual original pattern collected by the pattern collecting unit, so as to precisely aligning the adjusted target pattern template with the actual pattern collected by the pattern collecting unit.

In addition, the processing unit 22 may perform the following functions of, including but not limited to, selecting feature points, aligning the target pattern template with the collected pattern, and converting the target pattern template and the collected pattern into a grayscale pattern. The control unit is configured to control the processing unit 22 to process data and transmit a print signal.

In order to facilitate the data processing, the control system may further include a storage unit 21 configured to store related data, such as the original pattern and the target pattern template.

The digital inkjet printing head 1 provided in this embodiment is configured to perform inkjet printing based on an actual printing pattern of the target pattern template.

Reference is made to Figure 2, which is a hardware structure diagram of the digital printer provided in this embodiment. The digital printer may include the digital inkjet printing head 3, the control system 2 (which is not shown in Figure 2), and the pattern collecting unit 1.

In order to improve efficiency of the digital printing, the digital printer according to this embodiment may further include a material feeding device 4, including a rack 41 and a guiding belt 42. The guiding belt 42 is looped over a driving roller and a driven roller which are mounted on the rack. The guiding belt may be used to place the fabric thereon. The digital inkjet printing head 1 is located above the guiding belt. When the fabric is placed on the guiding belt, the digital inkjet printing head is above the printing region of the fabric. In specific implementations, a heat sensitive adhesive or a pressure sensitive adhesive may be provided on the guiding belt 42, to adhere the fabric to a surface of the guiding belt 42, so that the fabric is completely flatten on the guiding belt 42, facilitating the inkjet printing, thereby ensuring accuracy of the inkjet printing.

The guiding belt may be moved by a power device to switch the fabric in the printing region, so that the control unit controls the digital inkjet printing head to perform inkjet printing on the switched fabric in the printing region. Specifically, the power device includes a motor, the driving roller, and the driven roller. The motor is connected to the driving roller and controls the driving roller to rotate. The guiding belt 42 is looped over the driving roller and the driven roller, such that the driven roller is rotated following the driving roller.

The digital printer according to this embodiment further includes a movable unit 5. The movable unit 5 is configured to move in a direction perpendicular to a feeding direction of the guiding belt 42. The digital inkjet printing head 1 is arranged on the movable unit 5. The pattern collecting unit 3 is arranged on a side of the movable unit 5 opposite to a side in which the digital inkjet printing head 1 is located. That is, the pattern collecting unit 3 is arranged behind the printing region. There is a certain distance between the pattern collecting unit 3 and the digital inkjet printing head 1 in the feeding direction of the guiding belt. The pattern collecting unit 3 may move along with the movable unit 5, and collects in a real-time manner, the actual pattern on the fabric before the digital inkjet printing head 1 performs the inkjet printing, by means of scanning. The pattern collecting unit 3 may also be a fixed structure, and collects in a real-time manner, the actual pattern on the fabric before the digital inkjet printing head 1 performs the inkjet printing, by means of area array photography. In this case, the processing unit adjusts the target pattern template based on the collected actual original pattern, to align the target pattern template with the collected actual original pattern. The adjusted target pattern template is temporarily stored in the storage unit. When the actual original pattern collected in a real-time manner is fed to the printing region by the guiding belt 42 in a stepwise manner, the control system controls the digital inkjet printing head 1 to print the adjusted target pattern template stored in the storage unit on the fabric. The digital inkjet printing may be completed by repeatedly performing the above process.

The digital printer according to this embodiment may include a drying device configured to perform a drying process on the fabric formed after the inkjet printing is completed.

Compared with the conventional technology, the present disclosure has the following advantages and effects. A secondary design can be performed on an existing flexible fabric product that is easy to deform, to obtain a target pattern template, enriching a pattern and/or a color of the product. No matter how the original fabric is deformed during a process of the original fabric is placed in a digital printer, precise overprinting effect can be obtained. In addition, a user can perform redesigning on an existing product according to personal fondness to obtain a desired effect.

### Second Embodiment

In this embodiment, a digital printing method is provided, which may be performed by the digital printer provided in the first embodiment. The digital printing method includes the following steps 1) to 4).

In step 1), an original pattern on a fabric is acquired.

In step 2), designing is performed on the original pattern, and a target pattern template for digital printing is acquired from a design result.

The designing herein may be performed by a computer on an existing pattern or by hand painting. In the case of hand painting, the acquired original pattern may be printed, and hand painting is performed on the printed pattern. After the hand painting is completed, the pattern collecting is performed on the hand painted pattern again, to acquire the target pattern template for digital printing.

The performing designing on the original pattern may include: coloring the original pattern, and/or designing an overprinting pattern on the original pattern, to enrich the pattern and/or the color of the original fabric.

After the target pattern template is obtained, the original pattern and the target pattern template may be loaded to the storage unit 21 of the control system 2, for storage.

In step 3), the fabric with the original pattern is placed on the guiding belt of the digital printer, and information on a position and a shape of the actual pattern on the fabric to be delivered to an inkjet printing position is collected by a pattern collecting device to determine a position and a shape of the original pattern when located at the inkjet printing position. The position and the shape of the target pattern template are adjusted in real time to be aligned with the collected actual original pattern, to obtain an actual printing pattern of the target pattern template for digital printing.

In step 4), based on the actual printing pattern of the target pattern template, the digital inkjet printing head is controlled to perform inkjet printing on the fabric.

Specifically, the actual pattern on the fabric on the guiding belt is collected by the pattern collecting unit 3, and the pattern collecting unit 3 transmits the collected actual pattern to the storage unit 21.

In step 3), the target pattern template is adjusted by the processing unit 22 to be aligned with the actual pattern collected by the pattern collecting unit 3 (in position and profile).

Specifically, corresponding feature points may be respectively selected on the original template and the target pattern template, and a step-and-repeat process is performed on the feature points of the original template or the target pattern template, that is, the feature points of the original template or the target pattern template are repeatedly tiled in all directions. The processing unit 22 may identify the feature points on the original pattern template or the target pattern template obtained after the step-and-repeat process, and corresponding feature points on the actual pattern on the fabric on the guiding belt collected by the pattern collecting unit 3. In a case that a position deviation exists between the feature point on the actual pattern and the corresponding feature point on the original template, the target pattern template is appropriately adjusted based on the position deviation, to align the feature point on the adjusted target pattern template with the corresponding feature point on the actual pattern, so that the adjusted target pattern template is accurately aligned with the actual pattern in position and shape. Alternatively, in a case that a position deviation exists between the feature point on the actual pattern and the corresponding feature point on the target pattern template, the target pattern template is appropriately adjusted based on the position deviation, to align the feature point on the adjusted target pattern template with the corresponding feature point on the actual pattern, so that the adjusted target pattern template is accurately aligned with the actual pattern in position and shape.

In this embodiment, in order to speed up the subsequent processing, the original pattern may be firstly converted into a grayscale pattern, which speeds up the alignment of the processing unit 22, and thus improves the processing efficiency and the printing yield.

In this embodiment, points that are easy to be aligned and positioned on the pattern may be selected as features points, such as a point at a junction of lines or a corner of lines. Preferably, the feature point that may be selected on the existing original template is a point on the existing original template located at a junction with a target pattern template.

Preferably, in this embodiment, the feature points are selected in a manner of one feature point per square inch. A large number of feature points may lead to a high accuracy in alignment, while affects the speed of processing and reduces the production efficiency.

Preferably, if the deviation is large after matching the feature points on the target pattern template with the corresponding feature points on the tiled pattern collected by the pattern collecting unit 3, it is determined whether the target pattern template is aligned with the tiled pattern collected by the pattern collecting unit 3 through manual observation. If it is determined that the target pattern template is not aligned with the tiled pattern collected by the pattern collecting unit 3, the target pattern template is adjusted manually through manual intervention, to align each of the feature points on the target pattern template with the corresponding one feature point on the tiled pattern collected by the pattern collecting unit 3, so that the adjusted target pattern template is aligned with the collected tiled pattern. The adjusted target pattern template may also be aligned with the collected tiled pattern by means of software automatic correction.

After the adjusted target pattern template is aligned with the collected tiled pattern, the control unit 23 may control, based on the adjusted target pattern template, the digital inkjet printing head 1 to perform inkjet printing on the fabric, to print the target pattern template on the fabric.

In this embodiment, after the target pattern template is printed on the fabric, a drying process may be performed on the fabric to prevent dyeing of the fabric when the fabric is wound, which affects the quality of the fabric. The drying process may be performed by a drying device in the conventional technology.

Compared with the conventional technology, the present disclosure has the following advantages and effects. A secondary design can be performed on an existing flexible fabric product that is easy to deform, to obtain a target pattern template, enriching a pattern and/or a color of the product. In addition, a user can perform redesigning on an existing product according to personal fondness to obtain a desired effect.

### Third Embodiment

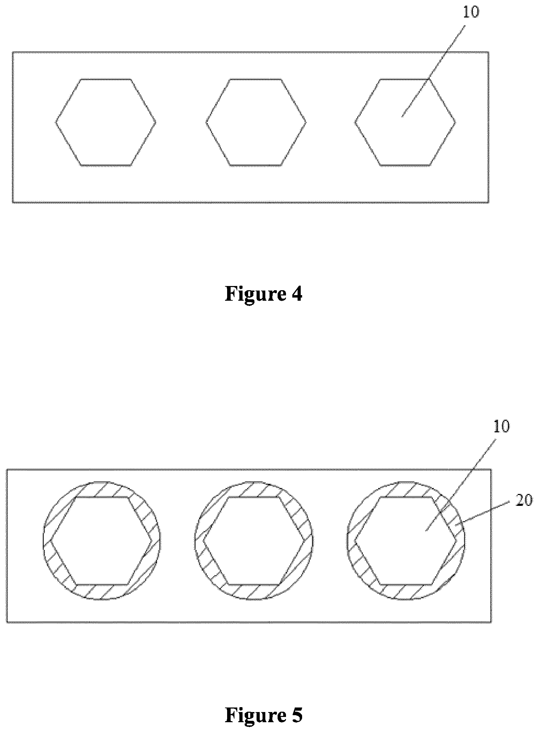

Reference is made to Figure 4 to 7, which respectively show fabrics according to embodiments. The fabric may be a textile, a plastic tablecloth, or the like. Figure 4 shows that a state of the fabric in which no target pattern template 20 is designed. In this case, there is only an original pattern 10 on the fabric. The original pattern 10 may be a lace pattern, a jacquard pattern, an embroidery pattern, or a printing pattern.

In Figure 5 to 7, the fabric has an original pattern 10 and a target pattern template 20, where the target pattern template 20 is formed by the digital printing method according to the second embodiment.

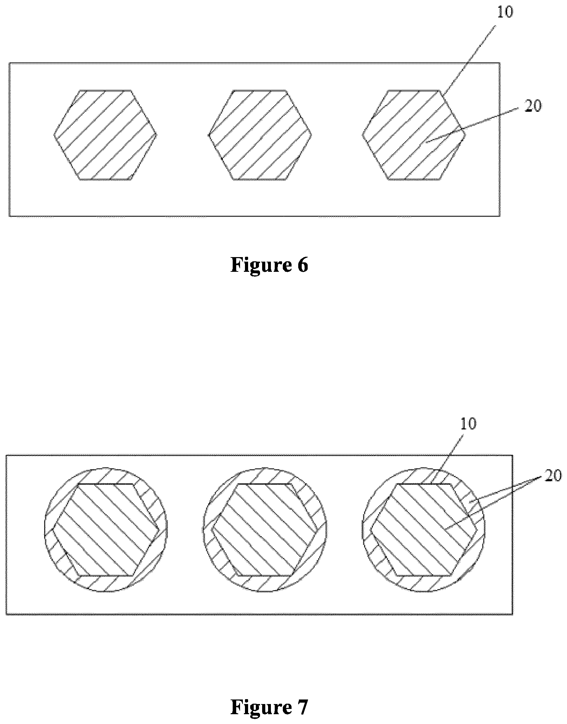

The target pattern template 20 may be a coloring pattern of the original pattern 10, or an overprinting pattern of the basic pattern, or a combination of the coloring pattern and the overprinting pattern. Figure 5 shows a case of designing an overprinting pattern based on the basic pattern 10 of the fabric. Figure 6 showing a case of performing coloring on the original pattern 10 on the fabric to obtain a coloring pattern. Figure 7 showing a case of performing both coloring and overprinting on the fabric.

Compared with the conventional technology, the present disclosure has the following advantages and effects. A secondary design can be performed on an existing flexible fabric product that is easy to deform, to obtain a target pattern template, enriching a pattern and/or a color of the product. In addition, a user can perform redesigning on an existing product according to personal fondness to obtain a desired effect.

The above description in this specification is merely for illustrating the present disclosure. Those skilled in the art may make various modifications or additions to the specific embodiments described above or replace the specific embodiments described above in a similar manner without departing from the scope of this specification or beyond the scope of the claims, all should fall within the protection scope of the present disclosure.

## Claims

1. A digital printing method for performing printing on a fabric by a digital printer, comprising:
acquiring at least one pattern repeat of an original pattern on the fabric, as an original template;
performing designing on the original template to acquire a target pattern template for digital printing from a design result;
selecting feature points on the original template, and selecting feature points on the target pattern template corresponding to the feature points on the original template;
placing the fabric in the digital printer;
collecting, by a pattern collecting unit in a real-time manner, an actual pattern on the fabric, to obtain a position and a shape of the actual pattern on the fabric in a printing region;
calculating, based on the position and the shape of the actual pattern, a deviation between each feature point on the actual pattern and a corresponding one of the feature points on the original template;
adjusting, based on the deviation, an inkjet printing position and a pattern shape of the target pattern template to align each of the feature points on the target pattern template with the corresponding one of the feature points on the actual pattern; and
controlling, based on the adjusted target pattern template, a digital inkjet printing head to perform inkjet printing on the fabric.

2. The method according to claim 1, wherein the acquiring at least one pattern repeat of an original pattern on the fabric comprises:
acquiring the at least one pattern repeat of the original pattern on the fabric by photographing or scanning the fabric; or
acquiring the at least one pattern repeat directly from a digital file of the original pattern.

3. The method according to claim 1, wherein the performing designing on the original template comprises:
coloring and/or drafting the original pattern.

4. The method according to claim 1, wherein the controlling, based on the adjusted target pattern template, a digital inkjet printing head to perform inkjet printing on the fabric comprises:
placing the fabric on a guiding belt, to cause the printing region of the fabric to face the digital inkjet printing head; and
controlling, based on the adjusted target pattern template, the digital inkjet printing head to perform inkjet printing in the printing region.

5. The method according to claim 4, further comprising:
moving the guiding belt by a power device to switch the fabric in the printing region, to control the digital inkjet printing head to perform inkjet printing on the switched fabric in the printing region.

6. The method according to claim 1, wherein the adjusting, based on the deviation, an inkjet printing position and a pattern shape of the target pattern template comprises:
performing a step-and-repeat process on the original template and the feature points on the original template;
identifying feature points on the actual pattern on the fabric and corresponding feature points on the original template obtained after the step-and-repeat process; and
calculating a position deviation between each of the feature points on the actual pattern and the corresponding one of the feature points on the original template obtained after the step-and-repeat process; and
adjusting the target pattern template based on the position deviation, to align each of the feature points on the adjusted target pattern template with the corresponding one of the feature points on the actual pattern.

7. The method according to claim 1, wherein the adjusting, based on the deviation, an inkjet printing position and a pattern shape of the target pattern template comprises:
selecting a plurality of feature points on the target pattern template, and performing a step-and-repeat process on the target pattern template and the feature points on the target pattern template;
identifying feature points of the actual pattern on the fabric and feature points on the target pattern template obtained after the step-and-repeat process; and
calculating a position deviation between each of the feature points on the actual pattern and the corresponding one of the feature points on the target pattern template obtained after the step-and-repeat process; and
adjusting the target pattern template based on the position deviation, to align each of the feature points on the adjusted target pattern template with the corresponding one of the feature points on the actual pattern.

8. The method according to any one of claims 1 to 7, further comprising:
storing the original template and the target pattern template.

9. The method according to any one of claims 1 to 7, further comprising:
performing a drying process on the fabric formed after the inkjet printing is completed.

10. The method according to any one of claims 1 to 7, wherein the original pattern is a lace pattern, a jacquard pattern, an embroidery pattern, or a printing pattern.

11. The method according to any one of claims 1 to 7, wherein the target pattern template comprises:
a coloring pattern; and/or
an overprinting pattern of the original pattern.

12. The method according to any one of claims 1 to 7, wherein the fabric is a textile, a plastic tablecloth, or a wallpaper.

13. The digital printing method according to any one of claims 1 to 7, wherein a size of the target pattern template is equal to a size of the original pattern or is an integer multiple of the size of the original pattern.

14. A digital printer, comprising:
a digital inkjet printing head;
a control system, comprising a processing unit and a control unit; and
a pattern collecting unit configured to: collect an actual pattern on a fabric in a real-time manner to obtain a position and a shape of the actual pattern on the fabric in a printing region; and transmit the position and the shape of the actual pattern to the control system, wherein
the processing unit is configured to:
receive the position and the shape of the actual pattern;
calculate a deviation between each feature point on the actual pattern and a corresponding one of feature points on an original template; and
adjust, based on the deviation, an inkjet printing position and a pattern shape of the target pattern template, to align the target pattern template with the actual pattern in pattern position and pattern profile, and
the control unit is configured to: control, based on the adjusted target pattern template, the digital inkjet printing head to perform inkjet printing on the fabric.

15. The digital printer according to claim 14, further comprising:
a guiding belt, wherein the guiding belt is arranged to place the fabric thereon, to cause the printing region of the fabric to face the digital inkjet printing head, wherein
the control unit controls, based on the adjusted target pattern template, the digital inkjet printing head to perform inkjet printing in the printing region.

16. The digital printer according to claim 15, wherein a heat sensitive adhesive or a pressure sensitive adhesive is provided on the guiding belt, to adhere the fabric flat on the guiding belt.

17. The digital printer according to claim 15, wherein the guiding belt is moved by a power device to switch the fabric in the printing region, and wherein the control unit controls the digital inkjet printing head to perform inkjet printing on the switched fabric in the printing region.

18. The digital printer according to claim 15, wherein the digital inkjet printing head is arranged on a movable unit configured to move in a direction perpendicular to a feeding direction of the guiding belt.

19. The digital printer according to any one of claims 14 to 18, wherein the control system further comprises:
a storage unit configured to store the original pattern and the target pattern template.

20. The digital printer according to any one of claims 14 to 18, wherein the pattern collecting unit is a scanning device or a camera.

21. The digital printer according to any one of claims 14 to 18, further comprising:
a drying device configured to perform a drying process on the fabric formed after the inkjet printing is completed.

22. A fabric formed by the digital printing method according to any one of claims 1 to 13.
